Europäisches Patentamt

European Patent Office

Office européen des brevets

(11) Publication number: **0 480 434 B1**

# EUROPEAN PATENT SPECIFICATION

(45) Date of publication of patent specification: **03.05.95**  (51) Int. Cl.⁶: **C08F 10/02**, C08F 4/656, C08F 4/637

(21) Application number: **91117315.1**

(22) Date of filing: **10.10.91**

(54) **Solid component of a catalyst for the homo- and co-polymerization of ethylene.**

(30) Priority: **11.10.90 IT 2171290**

(43) Date of publication of application:
**15.04.92 Bulletin 92/16**

(45) Publication of the grant of the patent:
**03.05.95 Bulletin 95/18**

(84) Designated Contracting States:
**AT BE CH DE DK ES FR GB GR IT LI LU NL SE**

(56) References cited:
**EP-A- 0 020 808**
**EP-A- 0 204 340**
**EP-A- 0 209 104**
**DE-A- 2 742 585**

(73) Proprietor: **ENICHEM S.p.A.**
**Piazza Repubblica, 16**
**I-20124 Milano (IT)**

(72) Inventor: **Luciani, Luciano**
**37, Via Mc Allister**
**I-44100 Ferrara (IT)**
Inventor: **Milani, Federico**
**2, Via J.F. Kennedy**
**I-45030 Santa Maria Maddalena,**
**Rovigo (IT)**

Inventor: **Pondrelli, Maddalena**
**54, Via Gramsci**
**I-40054 Budrio,**
**Bologna (IT)**
Inventor: **Borghi, Italo**
**49, Via Aldighieri**
**I-44100 Ferrara (IT)**
Inventor: **Invernizzi, Renzo**
**98, Via Primaticcio**
**I-20147 Milan (IT)**

(74) Representative: **Weinhold, Peter, Dr. et al**
**Patentanwälte**
**Dr. Weinhold, Dannenberg,**
**Dr. Gudel, Schubert**
**Siegfriedstrasse 8**
**D-80803 München (DE)**

## Description

The present invention relates to a solid catalyst component which, combined with metal alkyl compounds or metal alkyl halides, affords a catalytic system suitable for the homo-polymerization of ethylene and the co-polymerization of ethylene with, e.g., alpha-olefins such as propylene, butene-1, hexene-1, 4-methyl-pentene-1, octene-1 and similar monomers.

Catalytic systems of the Ziegler-Natta type for the polymerization of alpha-olefins are already known in the art and are generally composed of a combination of an organometallic compound of elements of groups I to III of the periodic table and a compound of a transition metal belonging to groups IV to VI of the periodic table (Boor Jr., "Ziegler-Natta Catalysts and Polymerization", Academic Press, New York, 1979). Generally, the organometallic compound used is an aluminium alkyl and the transition metal compound is a titanium halide. The possibility of binding or supporting this titanium halide on a solid, granular carrier is also known (Karol F.J., Catal. Rev. - Sci.Eng., 26, 384, 557-595, 1984).

Also known is the activation of magnesium chloride and its use in the preparation of catalysts based on highly active titanium salts for the polymerization of olefins, as described in DE-A-2 153 520 (CA 77, 62505, 1972); DE-A-2 638 429 (CA 83, 59870, 1972); DE-A-2 638 429 (CA 86, 140706, 1975); BE-A-848 427 (CA 87, 68839, 1977); and JP-A-79-118,484 (CA 92, 59450, 1979). Finally, it is known that heterogeneous catalysts for the polymerization of alpha-olefins are capable of reproducing their morphology in an equivalent polymeric morphology; this is made possible by applying technological conditions of catalyst synthesis which can be both complicated and onerous (Karol F.J., supra, and McDaniel M.P., J.Polym.Chem. Ed., 19, 1967-1976, 1981).

The polyolefin market increasingly demands products which are able to satisfy the most varied requirements of application whereas, on the other hand, there is also the need to simplify the production processes of polyolefins and to reduce investments and production costs. There is a particular need to have available catalysts which are not only simple and economical, but are also able to afford, if possible in a single polymerization step, olefinic homo- and copolymers which are suitable for both extrusion and moulding processes.

Eaborn, C.E. in "Organo Silicon Compounds", Butterworths Scientific Publications, London 1960; Rochow, E.G. in "The Chemistry of Silicon", New York, 1975; and Voorhoeve, R.J.H. in "Organosilanes", Elsevier, New York, 1967, describe an alkylation reaction between a dialkyl magnesium compound $(MgR_2)$ or an alkyl magnesium halide (MgRX) and silicon tetrachloride $(SiCl_4)$, which results in a solid non-crystalline compound, according to the reaction:

$$SiCl_4 + MgRX \text{ (or } MgR_2) \rightarrow MgXCl + R_nSiCl_{(4-n)}$$

It has now been found, according to the present invention, that this precipitate can be obtained by using a particle size which is specifically controlled in relation to the ratio of the reagents. It has also been found that the precipitate thus obtained is able to react with a titanium compound to afford a solid catalyst component which is extremely active in the (co)polymerization of ethylene, and in which the ratio of titanium in its tetravalent state to titanium in its trivalent state is related to the ratio of silicon to magnesium in the solid. It has finally been found that the addition of a metal compound selected from vanadium, zirconium and hafnium compounds in the precipitation phase of the solid, allows to obtain solid catalyst components which can yield polyethylenes with a broader molecular weight distribution in a single polymerization stage. According to the present invention it is, therefore, possible to obtain in an easy and convenient way catalysts which are capable of producing polyethylenes with various characteristics, using simplified polymerization processes, thus eliminating, or at least reducing, the disadvantages involved in the known techniques described above.

In accordance with this, one aspect of the present invention relates to a solid component of a catalyst for the (co)-polymerization of ethylene which includes magnesium, halogen and titanium and is obtainable by

(i) dissolution, in an inert, organic solvent, of a dialkyl magnesium compound, a silicon halide and, optionally, an alkyl halide, the atomic ratio of silicon in the silicon halide to magnesium in the dialkyl magnesium compound ranging from 0.5/l to 15/l and the molar ratio of alkyl halide to silicon halide ranging from 0/l to 10/l, and maintenance of the contact between the components until a granular solid precipitates from the solution;

(ii) contact and reaction of the above granular solid with a titanium halide, alkoxide and/or halogen-alkoxide, the atomic ratio of magnesium in the granular solid to titanium in the titanium compound(s) ranging from 1/l to 60/l, to prepare a solid catalyst component; and, in case a titanium alkoxide and/or halogen-alkoxide has been used in step (ii),

(iii) activation of the solid catalyst component by contact thereof with an alkyl aluminium halide.

In a preferred method, predetermined quantities of at least one compound of a metal M selected from vanadium, zirconium and hafnium are additionally added to the solution in step (i), to obtain solid catalyst components which are particularly suitable for the production of polymers and copolymers of ethylene having a broad molecular weight distribution.

In step (i) according to the present invention, a granular solid of a dialkyl magnesium compound, a silicon chloride and optionally also an alkyl halide is precipitated from a solution in an inert organic solvent.

Examples of silicon halides suitable for this purpose are silicon chlorides and bromides and chloro and bromo silanes. Specific examples of these compounds are silicon tetrachloride, silicon tetrabromide, trichlorosilane, vinyl trichlorosilane, trichloroethoxy silane and chloroethyl trichlorosilane. It is particularly preferred to use silicon tetrachloride.

The alkyl halides which are suitable for the above purpose are, e.g., alkyl chlorides and bromides, either primary, secondary or tertiary, the alkyl group whereof contains from 1 to 20 (e.g. 1 to 10) carbon atoms. Specific examples of suitable alkyl halides are ethyl bromide, butyl chloride, hexyl chloride, octyl chloride and cyclohexyl chloride.

Dialkyl magnesium compounds suitable for the present purpose are, e.g., compounds which can be defined by the formula MgR'R'', where R' and R'', the same or different from each other, stand for an alkyl group, either linear or branched which contains from 1 to 10 (e.g. 2 to 8) carbon atoms. Specific examples thereof are diethyl magnesium, ethyl butyl magnesium, dihexyl magnesium, butyl octyl magnesium, and dioctyl magnesium.

The solvents to be used for dissolving the above-mentioned compounds are organic solvents which are liquid under the operating conditions and are also inert (non-reactive) with respect to the other components. Examples of suitable solvents are hydrocarbons, particularly aliphatic hydrocarbons, such as pentane, isopentane, hexane, heptane and octane.

Step (i) may be carried out by preparing a solution of dialkyl magnesium compound, silicon halide and possibly alkyl halide in the organic solvent chosen, operating at or about room temperature (about 20 to 25°C), with such amounts of the above compounds as to result in an atomic ratio of silicon to magnesium of from 0.5/l to 15/l and a molar ratio of alkyl halide to silicon halide of from 0/l to 10/l. The solution thus obtained may then be heated to a temperature of from 40 to 100°C, causing the precipitation of a granular solid. In practice, when operating under the conditions specified above, an almost complete precipitation has taken place after 0.5 to 5 hours. Preferred operating conditions are an atomic ratio Si/Mg in the initial solution of from 1/l to 9/l and a molar ratio of alkyl halide to silicon halide of from 0/1 to 5/l, the solution being preferably heated to a temperature of from 70 to 95°C for 1 to 2 hours. The solid thus obtained is in granular form with a controlled particle size. More specifically, it has been found that more than 95% of the solid have a particle size of from 1 to 50 $\mu$m, and more than 90% have a granulometry ranging from 2 to 40 $\mu$m. It has also been found that, in the above-mentioned range, the obtained value of the apparent density of the polymers depends on the ratio Si/Mg in the starting solution, higher ratios corresponding to a higher apparent density. The alkyl halide, an optional component in step (i), basically has the effect of facilitating the chlorination of the dialkyl magnesium compound.

The granular solid precipitated in step (i) may be separated from the liquid phase and preferably is thoroughly washed with an inert liquid solvent, particularly a hydrocarbon solvent, such as hexane or heptane.

In step (ii), the solid obtained as described above is contacted and made to react with a titanium compound selected from titanium halides, alkoxides, halogen-alkoxides and mixtures thereof. Specific examples of these compounds are titanium tetrachloride, titanium tetrabromide, titanium tetra-n-propylate, titanium tetra-n-butylate, titanium tetra-i-propylate, titanium tetra-i-butylate and the corresponding titanium mono- and di-chloro alkoxides and mono- and di-bromo alkoxides. Mixtures of two or more of the above-mentioned titanium compounds may also be used.

Step (ii) may be carried out by suspending the granular solid in an inert organic solvent, for example a hydrocarbon solvent, of the aliphatic type, such as hexane, heptane, octane etc., and adding the titanium compound, possibly dissolved in the same or a similar solvent, to the suspension. In particular, the quantity of the titanium compound should be such as to result in an atomic ratio of magnesium in the granular solid to titanium in the titanium compound of from 1/1 to 60/1, preferably of from 4/1 to 20/1. The suspension thus obtained usually is kept at a temperature of from 50 to 100°C, preferably from 60 to 90°C over a period of from 0.5 to 5 hours, preferably 1 to 2 hours. A solid catalyst component is thus obtained, which can be recovered from the corresponding suspension, e.g., by evaporating the organic solvent at atmospheric or reduced pressure.

When a titanium alkoxide and/or halogen-alkoxide is used in step (ii), the solid catalyst component should undergo an activation treatment. This activation is carried out, in a further step (iii), by contacting the component at the end of step (ii) with an alkyl aluminium halide. Alkyl aluminium halides suitable for this purpose are, e.g., alkyl aluminium chlorides and bromides, such as diethyl aluminium chloride and bromide, ethyl aluminium sesquichloride and sesquibromide, and diisobutyl aluminium chloride and bromide. More specifically, in a preferred embodiment the solid catalyst component, suspended in an inert organic solvent such as a hydrocarbon solvent of the aliphatic type, for example hexane or heptane, is contacted with an alkyl aluminium halide, the ratio of halogen atoms in the alkyl aluminium halide to alkoxy groups in the titanium alkoxide and/or halogen-alkoxide preferably ranging from 0.1/l to 10/l, and the suspension is kept at a temperature preferably ranging from 10 to 100°C for 10 minutes to 5 hours. At the end of the treatment, the solid catalyst component can be recovered from the suspension, for example by filtration, washed with a hydrocarbon solvent and, if desired, dried.

When a titanium tetrahalide is used in step (ii), the catalyst component obtained at the end of this step generally contains 0.5 to 10% by weight of titanium, 10 to 30% by weight of magnesium and 50 to 75% by weight of halogen. When a titanium alkoxide and/or halogen-alkoxide is used in step (ii), the solid catalyst component obtained at the end if step (iii) may additionally contain small quantities of aluminium and alkoxide groups.

The mechanism of interaction between the titanium compound and the granular solid in step (ii) of the present process is not very clear, and in particular it is not known whether the interaction is of physical or chemical nature or both. Whatever the case may be, if the operating conditions described above are applied, there is obtained a catalyst component in the form of a granular solid with a particle size similar to that of the solid obtained in the precipitation step (i), capable of affording polymers having an apparent density which, depending on the specific conditions used, ranges from 0.25 to 0.40 g/ml, normally from about 0.30 to 0.35 g/ml. This granular solid has a pour rate which is lower than 30 sec(ASTM-D 1895). Moreover, the titanium in the solid catalyst component obtained at the end of step (ii) can be in a substantially tetravalent form, or partially in a trivalent form and partially in a tetravalent form depending, in particular, on the ratio Mg/Si in the solid obtained at the end of step (i). More specifically, with higher values of this ratio, the formation of trivalent titanium is more likely, whereas lower values favour the formation of tetravalent titanium. The degree of oxidation of the titanium can be further varied in the method which includes step (iii). In fact, in this step there is a reduction to the lower state of oxidation, together with an increase in the halogen content and an either partial or total elimination of the alkoxy groups present in the solid catalyst component. It is therefore possible, according to the present invention, to obtain solid catalyst components with the desired degree of oxidation of the titanium, suitable for the production of polyethylenes having a molecular weight distribution from narrow to average.

When polyethylenes having a relatively broad molecular weight distribution are required, at least one compound of a metal M selected from vanadium, zirconium and hafnium is added to the solution in step (i). Examples of suitable compounds for this purpose are the halides, oxyhalides, alkoxides and halogen-alkoxides, preference being given to halides, such as vanadium trichloride and tribromide, zirconium tetrachloride and tetrabromide and hafnium tetrachloride and tetrabromide. In this method, the atomic ratio of magnesium in the dialkyl magnesium compound to the sum of titanium and metal or metals M usually ranges from 1/l to 30/l and the atomic ratio of titanium to metal or metals M usually is from 0.1/l to 2/l. In a preferred method, the atomic ratio Mg/(Ti + M) is kept at a value of from 1/l to 9/l and the atomic ratio Ti/M is from 0.5/l to 1/l.

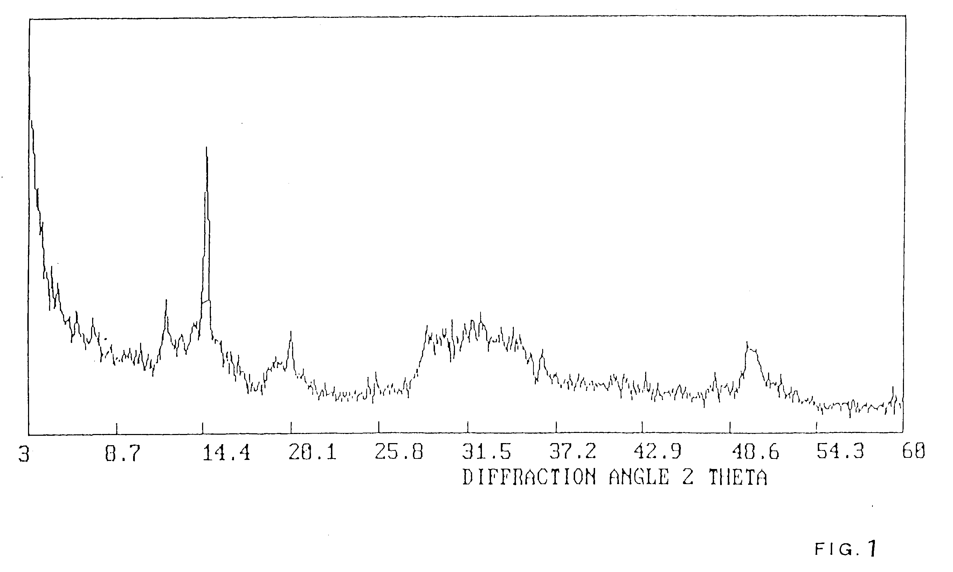

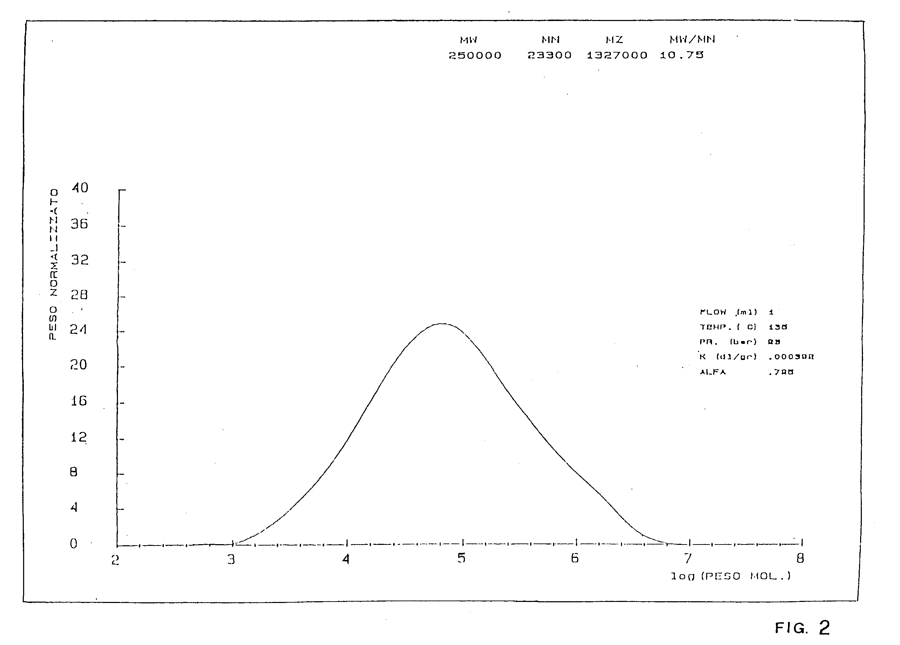

The mechanism with which the compound(s) of the metal(s) M interact(s) with the other components in step (i) of the present procedure is not entirely clear. It is assumed, however, that the interaction involves a reduction of the metal M by the dialkyl magnesium compound. For example, the solid catalyst component obtained in example 6 below, when subjected to X-ray analysis (the spectrum is shown in Figure 1), shows its characteristic peak of HfCl at about 10° and that of $HfCl_4$ at about 15 to 20°. This proves that the solid catalyst component contains a mixture of mono- and tetravalent Hf, with tri- and tetravalent Ti, in the presence of $MgCl_2$ in the delta form. In any case, at the end of step (i) there is obtained a granular solid with a particle size of the granules which is very similar to that obtained without the compound(s) of metal(s) M, which is suitable for the reaction with the titanium compound in the following step (ii). It is also assumed that in step (ii) redox reactions occur between the titanium and the metal(s) M, thus allowing a further diversification of the active catalytic centres present in the solid catalyst component. This diversification can be further increased by using more metals M and/or in the optional carrying out of step (iii), as specified previously. In any case, solid catalyst components are obtained which are highly active in the (co)-polymerization of ethylene and which are capable of yielding polyethylene having a broader distribution of molecular weights, operating in a single polymerization process. It should be pointed out that polymers having a broad molecular weight distribution have a monomodal distribution which makes them easier to mould and extrude as compared to those having a bimodal distribution. Figure 2 shows the molecular weight distribution of the polymer prepared in example 6 below. In addition, in the copolymerization of ethylene with alpha-olefin(s), copolymers with a homogenous distribution of the comonomer in the polymer chain may be obtained.

The present invention also provides catalysts for the (co)polymerization of ethylene, comprising the solid catalyst component described above combined with an organometallic compound of aluminium (co-catalyst) which preferably is selected from aluminium trialkyls and alkyl aluminium halides (particularly chlorides) having from 1 to 6 carbon atoms in the alkyl groups. Among these, aluminium trialkyls such as triethyl aluminium, tributyl aluminium, triisobutyl aluminium and trihexyl aluminium are particularly preferred. In the catalysts of the present invention, the atomic ratio of aluminium (in the co-catalyst) to titanium (in the solid catalyst component) generally ranges from 0.5:1 to 1,000:1, preferably from 50:1 to 200:1.

These catalysts are extremely active in processes for the polymerization of ethylene and the copolymerization of ethylene with alpha-olefins and can be used in polymerization processes carried out by means of the suspension technique in an inert diluent or by using the gas phase method in a fluidized or stirred bed. The alpha-olefins which can be copolymerized with ethylene generally are those containing from 3 to 15 carbon atoms, such as butene-1, hexene-1, 4-methyl-pentene-1, octene-1, undecene-1, 1,4-hexadiene and ethylidene norbornene. The general polymerization conditions are: temperature of from 50 to 100°C, total pressure of from 5 to 40 bar, the partial pressure ratio of hydrogen to ethylene ranging from 0:1 to 10:1.

The catalysts of the present invention are sensitive to the polymerization temperature and the kind of co-catalyst used. For example, it is possible to obtain a marked increase in the MFR (melt flow ratio) value of the polyethylenes when, under the same operating conditions, the polymerization temperature is lowered. It has also been found that an alkyl aluminium co-catalyst with a higher alkyl group (for example trihexyl aluminium) affords more constant polymerization kinetics and an increase in the MFR value of the polyethylenes produced than an aluminium alkyl co-catalyst with a lower alkyl group (such as triisobutyl aluminium). These observations allow the polymerization to be regulated according to the final products desired.

In any event, there is a high yield of olefinic polymer, and the polymer thus obtained has excellent rheological properties and, in particular, is in the form of non-friable granules of which more than 95% by weight have a size distribution ranging from 250 to 1000 $\mu$m and are without fines.

The following examples are to further illustrate the present invention without limiting it in any way.

## EXAMPLE 1

200 ml of a 20% solution by weight of butyl octyl magnesium ($Mg_1Bu_{1.5}Oct_{0.5}$; 29.16 g, 175 mmoles) and 202 ml of silicon tetrachloride (297 g, 1750 mmoles) in n-heptane are charged, in a nitrogen atmosphere, into a 500 ml flask equipped with reflux cooler, mechanical stirrer and thermometer. The mixture is heated at 77°C for 1 hour. The resulting solid precipitate in the form of granules of from 1 to 50 $\mu$m is separated by filtration and thoroughly washed with n-heptane. The washed solid is suspended in 150 ml of n-heptane and 1.43 g (7.5 mmoles) of titanium tetrachloride are added to the suspension. Contact is maintained for 1 hour at 90°C and the suspension is then dried by evaporating the solvent at atmospheric pressure.

17 g of a solid catalyst component are thus obtained in the form of granules whose size is similar to that of the solid precipitate, containing 0.9% by weight of titanium (in the form of tetravalent titanium), 24.3% by weight of magnesium and 66.8% by weight of chlorine.

The solid catalyst component prepared in the above way is used in a test for the polymerization of ethylene. More specifically, the polymerization is carried out in a 5 litre autoclave containing 2 litres of n-hexane, using 50 mg of the solid component and 4 mmoles of triethyl aluminium as cocatalyst.

The solid component is charged into the reaction vessel, under hydrogen at atmospheric pressure and at a temperature of 30°C. The reaction vessel is brought to the required operating conditions, within 30 minutes, by feeding ethylene and hydrogen up to a total pressure of 15 bar (ratio of hydrogen pressure to ethylene pressure of 0.47/l) and raising the temperature to 90°C. Polymerization is continued under these conditions for 60 minutes.

A yield equal to 9.0 kg of polyethylene per gram of solid catalyst component is thus obtained and the polyethylene has the following characteristics:

| | |
|---|---|
| - density: (ASTM D-1505) | 0.9570 g/ml |
| - MFI (2.16 kg): (Melt Flow Index - ASTM D-1238) | 0.38 g/10' |
| - apparent density: (ASTM D-1895) | 0.36 g/ml |
| - MFR: (MFR = Melt Flow Index Ratio, defined as ratio MFI (21.6 kg)/MFI (2.16 kg). | 33.8 |

The polyethylene is in granular form with the following size distribution in μm:

| | |
|---|---|
| ≧ 2000 | 0.0% by weight |
| < 2000 to ≧ 1000 | 0.5% by weight |
| < 1000 to ≧ 500 | 62.7% by weight |
| < 500 to ≧ 125 | 35.7% by weight |
| < 125 | 1.1% by weight . |

EXAMPLE 2

The procedure described in example 1 is followed, with the exception that 20.2 ml (29.66 g, 175 mmoles) of silicon tetrachloride are used.

17 g of a solid catalyst component in granular form, containing 1.4% by weight of titanium (42% in trivalent form), 22.6% by weight of magnesium and 62.5% by weight of chlorine, are thus obtained.

The solid catalyst component prepared in the above way is used in a test for the polymerization of ethylene carried out as described in example 1. A yield of 6.2 kg of polyethylene per gram of solid component is obtained and the polyethylene has the following characteristics:

- density: 0.9531 g/ml

- MFI (2.16 kg): 0.08 g/10'

- apparent density: 0.29 g/ml

- MFR: 47.6

- size distribution (μm):

    ≥2000                    0.1% by weight

    <2000 to >1000      15.3% by weight

    <1000 to ≥ 500      55.2% by weight

    < 500 to ≥ 125      28.9% by weight

    <125                    0.5% by weight .

EXAMPLE 3

100 ml of n-heptane, 48 ml of a 20% by weight solution of butyl octyl magnesium ($Mg_1 Bu_{1.5}Oct_{0.5}$; 7.0 g, 42 mmoles) and 17 ml of silicon tetrachloride (25 g, 147 mmoles) in n-heptane are charged, in a nitrogen atmosphere, into a 250 ml flask equipped with reflux cooler, mechanical stirrer and thermometer. The contents of the flask are heated at 90°C for 1 hour. The resulting solid precipitate in the form of granules of from 1 to 50 μm is separated by filtration and thoroughly washed with n-hexane. The washed solid is suspended in 100 ml of n-hexane and 1.22 g (3.6 mmoles) of titanium tetra-n-butylate are added. Contact is maintained for 1 hour at 65°C and the suspension is then dried by evaporating the solvent at a pressure of 10 mm Hg. Obtained are 4.5 g of a solid which is suspended in 50 ml of n-hexane, and 3.9 ml of a 40% by weight solution of ethyl aluminium sesquichloride (1.31 g, 5.3 mmoles) in decane are added to the suspension. Contact is maintained for 15 minutes at 25°C whereafter the solid is recovered by filtration, washed with n-hexane and dried by evaporating the solvent.

The solid catalyst component thus obtained has a particle size similar to that of the solid precipitate and contains 3.2% by weight of titanium, 19.4% by weight of magnesium, 58.1% by weight of chlorine, 8.9% by weight of butanol and 0.6% by weight of aluminium.

A test for the polymerization of ethylene is carried out as described in example 1, using 40 mg of the solid catalyst component and 5.0 mmoles of triethyl aluminium as cocatalyst.

A yield of 11.4 kg of polyethylene per gram of solid catalyst component is obtained and the polyethylene has the following characteristics:

| | |
|---|---|
| - density: | 0.9581 g/ml |
| - MFI (2.16 kg): | 0.48 g/10' |
| - apparent density: | 0.27 g/ml |
| - MFR: | 30.9 |
| - size distribution ($\mu$m): | |
| $\geq$ 2000 | 0.4% by weight |
| < 2000 to $\geq$ 1000 | 15.1% by weight |
| < 1000 to $\geq$ 500 | 74.6% by weight |
| < 500 to $\geq$ 125 | 9.1% by weight |
| < 125 | 0.8% by weight. |

EXAMPLE 4

The same procedure as in example 3 is carried out, the only difference being that 6 ml (5.32 g, 67.8 mmoles) of butyl chloride are added together with the silicon tetrachloride.

A solid catalyst component is obtained, containing 2.6% by weight of titanium, 20.0% by weight of magnesium, 58.1% by weight of chlorine, 8.0% by weight of butanol and 1.3% by weight of aluminium.

A test for the polymerization of ethylene is carried out as described in example 1, using 50 mg of the solid catalyst component and 6 mmoles of triethyl aluminium as cocatalyst.

A yield of 13.1 kg of polyethylene per gram of solid catalyst component is thus obtained and the polyethylene has the following characteristics:

| | |
|---|---|
| - density: | 0.9574 g/ml |
| - MFI (2.16 kg): | 0.38 g/10' |
| - apparent density: | 0.28 g/ml |
| - MFR: | 11.8 |
| - size distribution ($\mu$m): | |
| $\geq$ 2000 | 8.7% by weight |
| < 2000 to $\geq$ 1000 | 64.7% by weight |
| < 1000 to $\geq$ 500 | 22.6% by weight |
| < 500 to $\geq$ 125 | 3.1% by weight |
| < 125 | 0.9% by weight. |

EXAMPLE 5

100 ml of n-heptane, 10.2 ml of a 20% by weight solution of butyl octyl magnesium ($Mg_1 Bu_{1.5}Oct_{0.5}$; 1.49 g, 8.9 mmoles), 6.8 ml of silicon tetrachloride (9.98 g, 58.8 mmoles) and 4.6 ml (4.08 g, 44.0 mmoles) of butyl chloride in n-heptane are charged, in a nitrogen atmosphere, into a 250 ml flask equipped with reflux cooler, mechanical stirrer and thermometer. The contents of the flask are heated for 2 hours at a temperature of 90°C whereafter 6.8 ml (9.98 g, 58.8 mmoles) of silicon tetrachloride and 4.6 ml (4.08 g, 44.0 mmoles) of butyl chloride are again added and the mixture is kept for 2 hours at a temperature of 90°C. The solid precipitate in the form of granules of from 1 to 50 $\mu$m is separated by filtration and thoroughly washed with n-hexane. The washed solid is suspended in 50 ml of n-hexane and 2.55 g (5.7 mmoles) of titanium tetra-n-butylate are added to the suspension. Contact is maintained for 1 hour at 65°C and the suspension is then dried by evaporating the solvent at a pressure of 10 mm Hg. Thereby 2.1 g of a solid are obtained, which are suspended in 20 ml of n-hexane, and 3.4 ml of a 40% by weight solution of ethyl aluminium sesquichloride (0.99 g, 4.0 mmoles) in decane are added to the resulting suspension. Contact is maintained for 14 minutes at 25°C and the solid is then recovered by filtration, washed with n-hexane and dried by evaporating the solvent.

A catalyst component is obtained in the form of granules whose size is similar to that of the solid precipitate, and is used in a test for the polymerization of ethylene with the procedure described in example 4.

A yield of 12.1 kg of polyethylene per gram of solid catalyst component is obtained and the polyethylene has the following characteristics:

```
- density:                  0.9591 g/ml
- MFI (2.16 kg):            1.7 g/10'
- apparent density:         0.30 g/ml
- MFR:                      25.6
- size distribution (µm):
    ≥ 2000                   5.4% by weight
    < 2000 to ≥ 1000        15.0% by weight
    < 1000 to ≥ 500         46.6% by weight
    < 500 to ≥ 125          26.4% by weight
    < 125                    6.6% by weight.
```

EXAMPLE 6

114 ml of a 20% by weight solution of butyl octyl magnesium ($Mg_1 Bu_{1.5}Oct_{0.5}$) and 8.0 g (25.0 mmoles) of hafnium tetrachloride in n-heptane are charged, in a nitrogen atmosphere, into a 500 ml flask equipped with reflux cooler, mechanical stirrer and thermometer. The contents of the flask are heated for 15 minutes at 40°C, whereafter 100 ml (147 g, 864 mmoles) of silicon tetrachloride are added and the mixture is heated at 77°C for 1 hour. The solid precipitate in the form of granules of from 1 to 50 $\mu$m is separated by filtration and thoroughly washed with n-heptane. The washed solid is suspended in 150 ml of n-heptane and 2.8 ml (4.84 g, 25.5 mmoles) of titanium tetrachloride are added to the suspension. Contact is maintained for 1 hour at 90°C and the suspension is then dried by evaporating the solvent at atmospheric pressure.

20 g of a solid catalyst component are thus obtained in the form of granules whose size distribution is similar to that of the solid precipitate, and containing, in addition to the hafnium, 5.0% by weight of titanium (93% in the form of trivalent titanium), 11.1% by weight of magnesium and 57.1% by weight of chlorine.

The solid catalyst component prepared in the above way is used in a test for the polymerization of ethylene. More specifically, the polymerization is carried out in a 5 litre autoclave containing 2 litres of n-hexane, using 50 mg of the solid catalyst component and 5 mmoles of triisobutyl aluminium as cocatalyst, operating with a total pressure of 15 bar (ratio of hydrogen pressure to ethylene pressure of 1.2/l), at a temperature of 85°C and for 1.5 hours.

A yield equal to 8.1 kg of polyethylene per gram of solid catalyst component is obtained and the polyethylene has the following characteristics:

| | |
|---|---|
| - density: | 0.9565 g/ml |
| - MFI (2.16 kg): | 0.14 g/10' |
| - apparent density: | 0.28 g/ml |
| - MFR: | 76.4 |
| - size distribution ($\mu$m): | |
| $\geqslant$ 2000 | 0.0% by weight |
| < 2000 to $\geqslant$ 1000 | 1.0% by weight |
| < 1000 to $\geqslant$ 500 | 47.7% by weight |
| < 500 to $\geqslant$ 125 | 50.5% by weight |
| < 125 | 0.8% by weight. |

EXAMPLE 7

The solid catalyst component obtained according to the procedure described in example 6 is used in a further test for the polymerization of ethylene in a 5 litre autoclave, containing 2 litres of n-hexane, using 50 mg of said solid component and 5 mmoles of triisobutyl aluminium as cocatalyst, operating with a total pressure of 15 bar (ratio of hydrogen pressure to ethylene pressure of 0.94/l), at a temperature of 80°C, over a period of 4 hours.

A yield equal to 12.1 kg of polyethylene per gram of solid catalyst component is obtained and the polyethylene has the following characteristics:

| | |
|---|---|
| - density: | 0.9562 g/ml |
| - MFI (2.16 kg): | 0.09 g/10' |
| - apparent density: | 0.28 g/ml |
| - MFR: | 83 |
| - size distribution ($\mu$m): | |
| $\geqslant$ 2000 | 0.1% by weight |
| < 2000 to $\geqslant$ 1000 | 1.2% by weight |
| < 1000 to $\geqslant$ 500 | 60.7% by weight |
| < 500 to $\geqslant$ 125 | 37.6% by weight |
| < 125 | 0.4% by weight. |

EXAMPLE 8

The solid catalyst component obtained according to the procedure described in example 6 is used in a further test for the polymerization of ethylene in a 5 litre autoclave, containing 2 litres of n-hexane, using 50 mg of said solid component and 4 mmoles of trihexyl aluminium as cocatalyst, operating with a total pressure of 15 bar (ratio of hydrogen pressure to ethylene pressure of 1.17/l), at a temperature of 85°C, over a period of 2 hours.

A yield equal to 9.0 kg of polyethylene per gram of solid catalyst component is obtained and the polyethylene has the following characteristics:

| | |
|---|---|
| - density: | 0.9579 g/ml |
| - MFI (2.16 kg): | 0.33 g/10' |
| - apparent density: | 0.26 g/ml |
| - MFR: | 87.5 |
| - size distribution (μm): | |
| ≥2000 | 0.1% by weight |
| <2000 to ≥1000 | 0.8% by weight |
| <1000 to ≥500 | 53.9% by weight |
| <500 to ≥125 | 44.7% by weight |
| <125 | 0.5% by weight . |

EXAMPLE 9

The solid catalyst component obtained according to the procedure described in example 6 is used in a further test for the polymerization of ethylene in a 5 litre autoclave, containing 2 litres of n-hexane, using 50 mg of said solid component and 4 mmoles of trihexyl aluminium as cocatalyst, operating with a total pressure of 15 bar (ratio of hydrogen pressure to ethylene pressure of 1/l), at a temperature of 85°C, over a period of 2 hours.

A yield equal to 10.5 kg of polyethylene per gram of solid catalyst component is obtained and the polyethylene has the following characteristics:

| | |
|---|---|
| - density: | 0.956 g/ml |
| - MFI (2.16 kg): | 0.21 g/10' |
| - apparent density: | 0.2 g/ml |
| - MFR: | 102 |
| - size distribution (μm): | |
| ≥2000 | 0.1% by weight |
| <2000 to ≥1000 | 0.9% by weight |
| <1000 to ≥500 | 54.2% by weight |
| <500 to ≥125 | 44.3% by weight |
| <125 | 0.5% by weight . |

EXAMPLE 10

The solid catalyst component obtained according to the procedure described in example 6 is used in a further test for the polymerization of ethylene in a 5 litre autoclave, containing 2 litres of n-hexane, using 50 mg of said solid component and 5 mmoles of triisobutyl aluminium as cocatalyst, operating with a total pressure of 15 bar (ratio of hydrogen pressure to ethylene pressure of 1.8/l), at a temperature of 75°C, over a period of 4 hours.

A yield equal to 9.0 kg of polyethylene per gram of solid catalyst component is obtained and the polyethylene has the following characteristics:

| | |
|---|---|
| - density: | 0.9581 g/ml |
| - MFI (2.16 kg): | 0.11 g/10' |
| - apparent density: | 0.29 g/ml |
| - MFR: | 117 |
| - size distribution ($\mu$m): | |
| $\geqslant$ 2000 | 0.1% by weight |
| < 2000 to $\geqslant$ 1000 | 1.2% by weight |
| < 1000 to $\geqslant$ 500 | 55.2% by weight |
| < 500 to $\geqslant$ 125 | 42.9% by weight |
| < 125 | 0.6% by weight . |

EXAMPLE 11

A solid catalyst component is prepared according to the procedure described in example 6, with the difference that 4.0 g (12.5 mmoles) of hafnium tetrachloride and 1.4 ml (2.42 g, 12.8 mmoles) of titanium tetrachloride are used. 15.5 g of a solid catalyst component are thus obtained, containing, in addition to the hafnium, 3.6% by weight of titanium (88% in the form of trivalent titanium), 14.6% by weight of magnesium and 56.9% by weight of chlorine.

The solid catalyst component prepared in the above way is used in a test for the co-polymerization of ethylene. More specifically, the co-polymerization is carried out in a 5 litre autoclave containing 2 litres of n-hexane and 10 g of butene-1 as comonomer, using 60 mg of the solid catalyst component and 4 mmoles of triisobutyl aluminium as cocatalyst, operating with a total pressure of 15 bar (ratio of hydrogen pressure to ethylene pressure of 1.35/l), at a temperature of 85°C, over a period of 1.5 hours.

A yield equal to 8.3 kg of ethylene-butene-1 copolymer per gram of solid catalyst component is obtained and the copolymer thus obtained has the following characteristics:

| | |
|---|---|
| - density: | 0.9494 g/ml |
| - MFI (2.16 kg): | 0.24 g/10' |
| - apparent density: | 0.28 g/ml |
| - MFR: | 73.3 |
| - size distribution ($\mu$m): | |
| $\geqslant$ 2000 | 0.0% by weight |
| < 2000 to $\geqslant$ 1000 | 0.1% by weight |
| < 1000 to $\geqslant$ 500 | 17.2% by weight |
| < 500 to $\geqslant$ 125 | 77.9% by weight |
| < 125 | 4.8% by weight . |

EXAMPLE 12

The solid catalyst component obtained according to the procedure described in example 11 is used in a further test for the copolymerization of ethylene in a 5 litre autoclave containing 2 litres of n-hexane and 10 g of butene-1 as comonomer, using 30 mg of said solid component and 4 mmoles of triisobutyl aluminium as cocatalyst, operating with a total pressure of 15 bar (ratio of hydrogen pressure to ethylene pressure of 1.54/l), at a temperature of 85°C, over a period of 4 hours.

A yield equal to 6.2 kg of ethylene-butene-1 copolymer per gram of solid catalyst component is obtained and the copolymer thus obtained has the following characteristics:

```
- density:                  0.9525 g/ml
- MFI (2.16 kg):            1.32 g/10'
- apparent density:         0.275 g/ml
- MFR:                      50.2
- size distribution (μm):
    ≥ 2000                     0.0% by weight
    < 2000 to ≥ 1000           0.1% by weight
    < 1000 to ≥ 500           13.9% by weight
    < 500 to ≥ 125           83.7% by weight
    < 125                      2.3% by weight.
```

EXAMPLE 13

A solid catalyst component is prepared according to the procedure described in example 6, but with the difference that 4.0 g (12.5 mmoles) of hafnium tetrachlorid are used. Thereby 16 g of a solid catalyst component are obtained, containing, in addition to the hafnium, 4.7% by weight of titanium (74.5% in the form of trivalent titanium), 13.7% by weight of magnesium and 56.9% by weight of chlorine.

The solid catalyst component prepared in the above way is used in a test for the polymerization of ethylene. More specifically, the polymerization is carried out in a 5 litre autoclave, containing 2 litres of n-hexane, using 50 mg of the solid catalyst component and 5 mmoles of triisobutyl aluminium as cocatalyst, operating with a total pressure of 15 bar (ratio of hydrogen pressure to ethylene pressure of 1.26/l), at a temperature of 85°C, over a period of 1.5 hours.

A yield equal to 7.4 kg of polyethylene per gram of solid catalyst component is obtained and the polyethylene has the following characteristics:

```
- density:                  0.9581 g/ml
- MFI (2.16 kg):            0.27 g/10'
- apparent density:         0.26 g/ml
- MFR:                      62.2
- size distribution (μm):
    ≥ 2000                     0.1% by weight
    < 2000 to ≥ 1000           1.7% by weight
    < 1000 to ≥ 500           57.5% by weight
    < 500 to ≥ 125           40.0% by weight
    < 125                      0.7% by weight.
```

EXAMPLE 14

A solid catalyst component is prepared according to the procedure described in example 6, but with the difference that 16.0 g (50 mmoles) of hafnium tetrachloride are used. 27 g of a solid catalyst component are obtained, containing, in addition to the hafnium, 3.9% by weight of titanium (93.5% in the form of trivalent titanium), 7.8% by weight of magnesium and 50.9% by weight of chlorine.

The solid catalyst component prepared in the above way is used in a test for the polymerization of ethylene. More specifically, the polymerization is carried out in a 5 litre autoclave, containing 2 litres of n-hexane, using 50 mg of the solid catalyst component and 4 mmoles of triisobutyl aluminium as cocatalyst, operating with a total pressure of 15 bar (ratio of hydrogen pressure to ethylene pressure of 1.11/l), at a temperature of 85°C, over a period of 1.5 hours.

A yield equal to 2.7 kg of polyethylene per gram of solid catalyst component is obtained and the polyethylene has the following characteristics:

```
- density:                        0.9570 g/ml
- MFI (2.16 kg):                  0.10 g/10'
- apparent density:               0.29 g/ml
- MFR:                            81
- size distribution (μm):
    ≥2000                          0.0% by weight
    <2000 to  ≥1000                0.3% by weight
    <1000 to  ≥ 500                2.3% by weight
    < 500 to  ≥ 125               82.3% by weight
    < 125                         15.1% by weight .
```

## EXAMPLE 15

A solid catalyst component is prepared according to the procedure described in example 6, but with the difference that zirconium tetrachloride (5.8 g, 25 mmoles) is used instead of hafnium tetrachloride. Thereby 19 g of a solid catalyst component are obtained, containing, in addition to the zirconium, 4.9% by weight of titanium (93.0% in the form of trivalent titanium), 11.5% by weight of magnesium and 66.4% by weight of chlorine.

The solid catalyst component prepared in the above way is used in a test for the polymerization of ethylene. More specifically, the polymerization is carried out in a 5 litre autoclave, containing 2 litres of n-hexane, using 50 mg of the solid catalyst component and 4 mmoles of triisobutyl aluminium as cocatalyst, operating with a total pressure of 15 bar (ratio of hydrogen pressure to ethylene pressure of 1.10/l), at a temperature of 85°C, over a period of 1.5 hours.

A yield equal to 8.4 kg of polyethylene per gram of solid catalyst component is obtained and the polyethylene has the following characteristics:

```
- density:                        0.9571 g/ml
- MFI (2.16 kg):                  0.8 g/10'
- apparent density:               0.29 g/ml
- MFR:                            52.4
- size distribution (μm):
    ≥2000                          0.0% by weight
    <2000 to  ≥1000                1.5% by weight
    <1000 to  ≥ 500               45.4% by weight
    < 500 to  ≥ 125               52.4% by weight
    < 125                          0.7% by weight
```

EXAMPLE 16

A solid catalyst component is prepared according to the procedure described in example 6, but with the difference that 3.93 g (25 mmoles) of vanadium trichloride are used instead of hafnium tetrachloride. Thereby 23.6 g of a solid catalyst component are obtained, containing 2.8% by weight of titanium, 5.8% by weight of vanadium, 11.1% by weight of magnesium and 47.1% by weight of chlorine.

The solid catalyst component prepared in the above way is used in a test for the polymerization of ethylene. More specifically, the polymerization is carried out in a 5 litre autoclave, containing 2 litres of n-hexane, using 50 mg of the solid catalyst component and 5 mmoles of triisobutyl aluminium as cocatalyst, operating with a total pressure of 15 bar (ratio of hydrogen pressure to ethylene pressure of 1.46/l), at a temperature of 85°C, over a period of 2 hours.

A yield equal to 6.2 kg of polyethylene per gram of solid catalyst component is obtained and the polyethylene has the following characteristics:

```
- density:                    0.9635 g/ml
- MFI (2.16 kg):              2.82 g/10'
- apparent density:           0.28 g/ml
- MFR:                        39.2
- size distribution (µm):
    ≥ 2000                       1.3% by weight
    < 2000 to ≥ 1000             8.2% by weight
    < 1000 to ≥ 500             80.6% by weight
    < 500 to ≥ 125              9.4% by weight
    < 125                        0.5% by weight .
```

EXAMPLE 17

114 ml of a 20% by weight solution of butyl octyl magnesium ($Mg_1 Bu_{1.5} Oct_{0.5}$) and 6.0 g of a mixture of vanadium trichloride and hafnium tetrachloride (atomic ratio V/Hf equal to 1/l) in n-heptane are charged, in a nitrogen atmosphere, into a 500 ml flask equipped with reflux cooler, mechanical stirrer and thermometer. The mixture of chlorides was previously ground for 4 hours in an argon atmosphere. The resulting suspension is heated to 40°C for 15 minutes and 100 ml (147 g, 864 mmoles) of silicon tetrachloride are then added. The contents of the flask are heated for 1 hour at 77°C. The solid granular precipitate is separated by filtration and thoroughly washed with n-hexane. The washed solid is suspended in 150 ml of n-hexane,and 2.8 ml (4.84 g, 25.5 mmoles) of titanium tetrachloride are added to the suspension. Contact is maintained for 1 hour at 90°C and the suspension is dried by evaporating the solvent at atmospheric pressure.

21 g of a solid catalyst component are thus obtained, containing 3.0% by weight of titanium, 3.1% by weight of vanadium, 12.5% by weight of magnesium and 52.5% by weight of chlorine.

The solid catalyst component prepared in the above way is used in a test for the polymerization of ethylene. More specifically, the polymerization is carried out in a 5 litre autoclave, containing 2 litres of n-hexane, using 50 mg of the solid catalyst component and 5 mmoles of trihexyl aluminium as cocatalyst, operating with a total pressure of 15 bar (ratio of hydrogen pressure to ethylene pressure of 1.35/l), at a temperature of 75°C, over a period of 4 hours.

A yield equal to 8.4 kg of polyethylene per gram of solid catalyst component is obtained and the polyethylene has the following characteristics:

14

| - density: | 0.9540 g/ml |
| - MFI (2.16 kg): | 0.045 g/10' |
| - apparent density: | 0.28 g/ml |
| - MFR: | 183 |
| - size distribution ($\mu$m): | |
| $\geq$2000 | 0.1% by weight |
| <2000 to $\geq$1000 | 1.2% by weight |
| <1000 to $\geq$ 500 | 57.7% by weight |
| < 500 to $\geq$125 | 40.6% by weight |
| < 125 | 0.4% by weight . |

EXAMPLE 18

The solid catalyst component prepared according to the procedure described in example 6 is used in a fluidized bed polymerization reactor. The reactor consists of an 80 cm long steel tube having a diameter of 5 cm and containing a porous metal disk on the bottom to allow the gas to gurgle upwards, through the bed. 5 g of solid catalyst component are suspended in 100 ml of isobutane and 1 ml of this suspension is charged into the reaction vessel. A solution of 50 mmoles of triisobutyl aluminium in 100 ml of isobutane is also prepared, and 10 ml thereof are introduced into the reaction vessel. A 1:1 mixture of ethylene and hydrogen is distributed in the reaction vessel with a calibrated rotameter. An automatic pressure release valve discharges part of the unreacted mixture, which leaves the reaction vessel, in such a way as to keep the pressure of the system constant at 20 bar. The mixture is recycled in the reactor by means of a compressor and is mixed with the fresh feed. The recycling rate is regulated with a flow control valve to obtain an adequate fluidifying and mixing level. The temperature of the reaction vessel is fixed by passing the recycled and fresh flows through both a cooler and a heater, in order to set the temperature at the entrance to the reaction vessel. The cocatalyst solution is pumped by means of a calibrated pump through a coil in a heated bath to allow the complete evaporation of the solution. The vapour flow is then injected into the recycled ethylene-hydrogen mixture. At the beginning of the test, 1 ml of solid catalyst component is injected into the suspension and the flow of the ethylene-hydrogen mixture is started. When the system has become stationary, the cocatalyst is introduced and the polymerization process begins.

The duration of the test is 1.5 hours and the polymerization temperature is 75°C.

A yield of 10.5 kg of polymer per gram of solid catalyst component is obtained and the polyethylene thus obtained has the following characteristics:

| - density: | 0.9525 g/ml |
| - MFI (2.16 kg): | 0.21 g/10' |
| - apparent density: | 0.38 g/ml |
| - MFR: | 107 |
| - size distribution ($\mu$m): | |
| $\geq$2000 | 0.0% by weight |
| <2000 to $\geq$1000 | 10.1% by weight |
| <1000 to $\geq$ 500 | 54.9% by weight |
| < 500 to $\geq$125 | 35.0% by weight |
| < 125 | 0.0% by weight . |

**Claims**

**Claims for the following Contracting States : AT, BE, CH, LI, DE, DK, FR, GB, GR, IT, LU, NL, SE**

1. Solid component of a catalyst for the (co)polymerization of ethylene, comprising magnesium, halogen and titanium and obtainable by the steps of

    (i) dissolving, in an inert, organic solvent, a dialkyl magnesium compound, a silicon halide and, optionally, an alkyl halide, the atomic ratio of silicon to magnesium ranging from 0.5/l to 15/l, and the molar ratio of alkyl halide to silicon halide ranging from 0/l to 10/l, and maintaining the contact between the above compounds until a granular solid precipitates from the solution;

    (ii) contacting and reacting the above granular solid with a titanium halide, alkoxide and/or halogen-alkoxide, the atomic ratio of magnesium to titanium ranging from 1/1 to 60/l, to prepare a solid catalyst component; and, in case a titanium alkoxide or halogen-alkoxide has been used in step (ii),

    (iii) activating the solid of step (ii) with alkyl aluminium halide.

2. Catalyst component according to claim 1, wherein in step (i) the silicon halide is selected from silicon chlorides, silicon bromides, chloro silanes, bromo silanes and mixtures thereof, e.g. from silicon tetrachloride, silicon tetrabromide, trichlorosilane, vinyl trichlorosilane, trichloroethoxy silane and chloroethyl trichlorosilane, and preferably is silicon tetrachloride.

3. Catalyst component according to any one of claims 1 and 2, wherein in step (i) the alkyl halide is selected from primary, secondary and/or tertiary $C_1$-$C_{20}$ alkyl chlorides and bromides, particularly from ethyl bromide, butyl chloride, hexyl chloride, octyl chloride, cyclohexyl chloride and mixtures thereof.

4. Catalyst component according to any one of claims 1 to 3, wherein in step (i) the dialkyl magnesium compound is selected from those of formula MgR'R'', wherein R' and R'', the same or different, represent linear or branched $C_1$-$C_{10}$ alkyl groups, and particularly from diethyl magnesium, ethyl butyl magnesium, dihexyl magnesium, butyl octyl magnesium, dioctyl magnesium and mixtures thereof.

5. Catalyst component according to any one of claims 1 to 4, wherein in step (i) the solvent is selected from hydrocarbons, preferably aliphatic hydrocarbons.

6. Catalyst component according to any one of claims 1 to 5, wherein in step (i) the solution is heated to a temperature of from 40 to 100 °C over a period of 0.5 to 5 hours.

7. Catalyst component according to any one of claims 1 to 6, wherein in step (i) the atomic ratio Si/Mg ranges from 1/1 to 9/1 and/or the molar ratio of alkyl halide to silicon halide ranges from 0/1 to 5/1, the solution being heated to a temperature of from 70 to 95 °C for 1 to 2 hours.

8. Catalyst component according to any one of claims 1 to 7, wherein in step (i) the solid precipitate is separated from the liquid and is thoroughly washed with an inert liquid solvent, preferably a hydrocarbon solvent.

9. Catalyst component according to any one of claims 1 to 8, wherein in step (ii) the titanium compound is selected from titanium tetrachloride, titanium tetrabromide, titanium tetra-n-propylate, titanium tetra-n-butylate, titanium tetra-i-propylate, titanium tetra-i-butylate, the corresponding titanium mono- and di-chloro alkoxides and mono- and di-bromo alkoxides, and mixtures thereof.

10. Catalyst component according to any one of claims 1 to 9, wherein in step (ii) the granular solid is suspended in an inert organic solvent, at a temperature of from 50 to 100 °C over a period of 0.5 to 5 hours.

11. Catalyst component according to any one of claims 1 to 10, wherein in step (ii) the atomic ratio Mg/Ti ranges from 4/1 to 20/1 and the operating temperature ranges from 60 to 90 °C for 1 to 2 hours.

12. Catalyst component according to any one of claims 1 to 11, wherein the component obtained at the end of step (ii) is recovered from the corresponding suspension by evaporating the organic solvent at atmospheric or reduced pressure.

13. Catalyst component according to any one of claims 1 to 12, wherein in step (iii) the alkyl aluminium halide is selected from alkyl aluminium chlorides and bromides, particularly from diethyl aluminium chloride and bromide, ethyl aluminium sesquichloride, diisobutyl aluminium chloride and bromide and mixtures thereof, and the activation is carried out with the component suspended in an inert organic solvent, the ratio of halogen atoms in the alkyl aluminium halide to alkoxy groups in the titanium alkoxide and/or halogen alkoxide ranging from 0.1/1 to 10/1, at a temperature ranging from 10 to 100°C, over a period of from 10 minutes to 5 hours.

14. Catalyst component according to any one of claims 1 to 13, wherein at the end of step (iii) the component is recovered from the corresponding suspension by filtration, is washed with hydrocarbon solvent and dried.

15. Catalyst component according to any one of claims 1 to 14, additionally containing at least one metal M selected from vanadium, zirconium and hafnium, the corresponding metal compound(s) having preferably been added to the solution of step (i).

16. Catalyst component according to claim 15, wherein the compound(s) of vanadium, zirconium and hafnium is (are) selected from the corresponding halides, oxyhalides, alkoxides and halogen-alkoxides, particularly from vanadium trichloride and tribromide, zirconium tetrachloride and tetrabromide and hafnium tetrachloride and tetrabromide, as well as mixtures thereof.

17. Catalyst component according to any one of claims 15 and 16, wherein in step (ii) the atomic ratio of magnesium to the sum of titanium and metal(s) M ranges from 1/1 to 30/1, particularly from 1/1 to 9/1, the atomic ratio Ti/M being from 0.1/1 to 2/1, particularly from 0.5/1 to 1/1.

18. Catalyst for the (co)polymerization of ethylene, comprising the solid catalyst component according to any one of claims 1 to 17 and an organometallic compound of aluminium.

19. Process for the (co)polymerization of ethylene, wherein the catalyst according to claim 18 or the solid catalyst component of any one of claims 1 to 17 is employed.

**Claims for the following Contracting State : ES**

1. Process for the (co)polymerization of ethylene, wherein a solid component of a catalyst for the (co)-polymerization of ethylene is employed which comprises magnesium, halogen and titanium and obtainable by the steps of
(i) dissolving, in an inert, organic solvent, a dialkyl magnesium-compound, a silicon halide and, optionally, an alkyl halide, the atomic ratio of silicon to magnesium ranging from 0.5/1 to 15/1, and the molar ratio of alkyl halide to silicon halide ranging from 0/1 to 10/1, and maintaining the contact between the above compounds until a granular solid precipitates from the solution;
(ii) contacting and reacting the above granular solid with a titanium halide, alkoxide and/or halogenalkoxide, the atomic ratio of magnesium to titanium ranging from 1/1 to 60/1, to prepare a solid catalyst component; and, in case a titanium alkoxide or halogenalkoxide has been used in step (ii),
(iii) activating the solid of step (ii) with alkyl aluminium halide.

2. Process according to claim 1, wherein in step (i) the silicon halide is selected from silicon chlorides, silicon bromides, chloro silanes, bromo silanes and mixtures thereof, e.g. from silicon tetrachloride, silicon tetrabromide, trichlorosilane, vinyl trichlorosilane, trichloroethoxy silane and chloroethyl trichlorosilane, and preferably is silicon tetrachloride.

3. Process according to any one of claims 1 and 2, wherein in step (i) the alkyl halide is selected from primary, secondary and/or tertiary $C_1$-$C_{20}$ alkyl chlorides and bromides, particularly from ethyl bromide, butyl chloride, hexyl chloride, octyl chloride, cyclohexyl chloride and mixtures thereof.

4. Process according to any one of claims 1 to 3, wherein in step (i) the dialkyl magnesium compound is selected from those of formula MgR'R'', wherein R' and R'', the same or different, represent linear or branched $C_1$-$C_{10}$ alkyl groups, and particularly from diethyl magnesium, ethyl butyl magnesium, dihexyl magnesium, butyl octyl magnesium, dioctyl magnesium and mixtures thereof.

5. Process according to any one of claims 1 to 4, wherein in step (i) the solvent is selected from hydrocarbons, preferably aliphatic hydrocarbons.

6. Process according to any one of claims 1 to 5, wherein in step (i) the solution is heated to a temperature of from 40 to 100°C over a period of 0.5 to 5 hours.

7. Process according to any one of claims 1 to 6, wherein in step (i) the atomic ratio Si/Mg ranges from 1/1 to 9/1 and/or the molar ratio of alkyl halide to silicon halide ranges from 0/1 to 5/1, the solution being heated to a temperature of from 70 to 95°C for 1 to 2 hours.

8. Prcoess according to any one of claims 1 to 7, wherein in step (i) the solid precipitate is separated from the liquid and is thoroughly washed with an inert liquid solvent, preferably a hydrocarbon solvent.

9. Process according to any one of claims 1 to 8, wherein in step (ii) the titanium compound is selected from titanium tetrachloride, titanium tetrabromide, titanium tetra-n-propylate, titanium tetra-n-butylate, titanium tetra-i-propylate, titanium tetra-i-butylate, the corresponding titanium mono- and di-chloro alkoxides and mono- and di-bromo alkoxides, and mixtures thereof.

10. Process according to any one of claims 1 to 9, wherein in step (ii) the granular solid is suspended in an inert organic solvent, at a temperature of from 50 to 100°C over a period of 0.5 to 5 hours.

11. Process according to any one of claims 1 to 10, wherein in step (ii) the atomic ratio Mg/Ti ranges from 4/1 to 20/1 and the operating temperature ranges from 60 to 90°C for 1 to 2 hours.

12. Process according to any one of claims 1 to 11, wherein the component obtained at the end of step (ii) is recovered from the corresponding suspension by evaporating the organic solvent at atmospheric or reduced pressure.

13. Process according to any one of claims 1 to 12, wherein in step (iii) the alkyl aluminium halide is selected from alkyl aluminium chlorides and bromides, particularly from diethyl aluminium chloride and bromide, ethyl aluminium sesquichloride, diisobutyl aluminium chloride and bromide and mixtures thereof, and the activation is carried out with the component suspended in an inert organic solvent, the ratio of halogen atoms in the alkyl aluminium halide to alkoxy groups in the titanium alkoxide and/or halogen alkoxide ranging from 0.1/1 to 10/1, at a temperature ranging from 10 to 100°C, over a period of from 10 minutes to 5 hours.

14. Process according to any one of claims 1 to 13, wherein at the end of step (iii) the component is recovered from the corresponding suspension by filtration, is washed with hydrocarbon solvent and dried.

15. Process according to any one of claims 1 to 14, additionally containing at least one metal M selected from vanadium, zirconium and hafnium, the corresponding metal compound(s) having preferably been added to the solution of step (i).

16. Process according to claim 15, wherein the compound(s) of vanadium, zirconium and hafnium is (are) selected from the corresponding halides, oxyhalides, alkoxides and halogen-alkoxides, particularly from vanadium trichloride and tribromide, zirconium tetrachloride and tetrabromide and hafnium tetrachloride and tetrabromide, as well as mixtures thereof.

17. Process according to any one of claims 15 and 16, wherein in step (ii) the atomic ratio of magnesium to the sum of titanium and metal(s) M ranges from 1/1 to 30/1, particularly from 1/1 to 9/1, the atomic ratio Ti/M being from 0.1/1 to 2/1, particularly form 0.5/1 to 1/1.

18. Process for the (co)polymerization of ethylene, wherein a catalyst for the (co)polymerization of ethylene is employed comprising the solid catalyst component according to any one of claims 1 to 17 and an organometallic compound of aluminium.

**19.** Solid component of a catalyst for the (co)polymerization of ethylene according to any one of claims 1 - 17.

**20.** Catalyst for the (co)polymerization of ethylene comprising the solid catalyst component according to claim 19 and an organometallic compound of aluminium.

**Patentansprüche**
**Patentansprüche für folgende Vertragsstaaten : AT, BE, CH, LI, DE, DK, FR, GB, GR, IT, LU, NL, SE**

**1.** Feste Komponente eines Katalysators für die (Co)polymerisation von Ethylen, umfassend Magnesium, Halogen und Titan und erhältlich durch die Schritte:
(i) Lösen einer Dialkylmagnesium-Verbindung, eines Siliciumhalogenids und, gegebenenfalls, eines Alkylhalogenids in einem inerten organischen Lösemittel, wobei das Atomverhältnis von Silicium zu Magnesium in einem Bereich von 0.5/1 bis 15/1 liegt und das Molverhältnis von Alkylhalogenid zu Siliciumhalogenid in einem Bereich von 0/1 bis 10/1 und wobei der Kontakt zwischen den oben genannten Verbindungen solange gehalten wird, bis ein granulärer Feststoff aus der Lösung ausfällt,
(ii) Kontaktieren und Umsetzen des obigen granulären Feststoffs mit einem Titanhalogenid, -alkoxid und/oder -halogenalkoxid, wobei das Atomverhältnis von Magnesium zu Titan im Bereich von 1/1 bis 60/1 liegt, um eine feste Katalysatorkomponente herzustellen und, für den Fall, daß ein Titanalkoxid oder -halogenalkoxid in Schritt (ii) verwendet worden ist,
(iii) Aktivieren des Feststoffs aus Schritt (ii) mit Alkylaluminiumhalogenid.

**2.** Katalysatorkomponente gemäß Anspruch 1, worin in Schritt (i) das Siliciumhalogenid ausgewählt ist aus Siliciumchloriden, Siliciumbromiden, Chlorsilanen, Bromsilanen und deren Mischungen, z.B. aus Siliciumtetrachlorid, Siliciumtetrabromid, Trichlorsilan, Vinyltrichlorsilan, Trichlorethoxysilan und Chlorethyltrichlorsilan, und vorzugsweise Siliciumtetrachlorid ist.

**3.** Katalysatorkomponente gemäß irgendeinem der Ansprüche 1 und 2, worin in Schritt (i) das Alkylhalogenid ausgewählt ist aus primären, sekundären und/oder tertiären $C_1$-$C_{20}$-Alkylchloriden und -bromiden, insbesondere aus Ethylbromid, Butylchlorid, Hexylchlorid, Octylchlorid, Cyclohexylchlorid und deren Mischungen.

**4.** Katalysatorkomponente gemäß irgendeinem der Ansprüche 1 bis 3, worin in Schritt (i) die Dialkylmagnesiumverbindung ausgewählt ist aus solchen der Formel MgR'R'', worin R' und R'', gleich oder verschieden, lineare oder verzweigte $C_1$-$C_{10}$-Alkylgruppen darstellen, und insbesondere aus Diethylmagnesium, Ethylbutylmagnesium, Dihexylmagnesium, Butyloctylmagnesium, Dioctylmagnesium und deren Mischungen.

**5.** Katalysatorkomponente gemäß irgendeinem der Ansprüche 1 bis 4, worin in Schritt (i) das Lösemittel ausgewählt ist aus Kohlenwasserstoffen, vorzugsweise aliphatischen Kohlenwasserstoffen.

**6.** Katalysatorkomponente gemäß irgendeinem der Ansprüche 1 bis 5, worin in Schritt (i) die Lösung über einen Zeitraum von 0.5 bis 5 Stunden auf eine Temperatur von 40 bis 100 °C erhitzt wird.

**7.** Katalysatorkomponente gemäß irgendeinem der Ansprüche 1 bis 6, worin in Schritt (i) das Atomverhältnis Si/Mg im Bereich von 1/1 bis 9/1 und/oder das Molverhältnis von Alkylhalogenid zu Siliciumhalogenid im Bereich von 0/1 bis 5/1 liegt, wobei die Lösung 1 bis 2 Stunden lang auf eine Temperatur von 70 bis 95 °C erhitzt wird.

**8.** Katalysatorkomponente gemäß irgendeinem der Ansprüche 1 bis 7, worin in Schritt (i) der feste Niederschlag von der Flüssigkeit abgetrennt wird und sorgfältig mit einem inerten flüssigen Lösemittel, vorzugsweise einem Kohlenwasserstoff-Lösemittel, gewaschen wird.

**9.** Katalysatorkomponente gemäß irgendeinem der Ansprüche 1 bis 8, worin in Schritt (ii) die Titanverbindung ausgewählt ist aus Titantetrachlorid, Titantetrabromid, Titan-tetra-n-propylat, Titan-tetra-n-butylat, Titan-tetra-i-propylat, Titan-tetra-i-butylat, den entsprechenden Titan-mono- und -dichloralkoxiden und -mono- und -dibromalkoxiden und deren Mischungen.

**10.** Katalysatorkomponente gemäß irgendeinem der Ansprüche 1 bis 9, worin in Schritt (ii) der granuläre Feststoff in einem inerten organischen Lösemittel bei einer Temperatur von 50 bis 100 °C über einen Zeitraum von 0.5 bis 5 Stunden lang suspendiert wird.

**11.** Katalysatorkomponente gemäß irgendeinem der Ansprüche 1 bis 10, worin in Schritt (ii) das Atomverhältnis Mg/Ti im Bereich von 4/1 bis 20/1 und die Arbeitstemperatur 1 bis 2 Stunden lang im Bereich von 60 bis 90 °C liegt.

**12.** Katalysatorkomponente gemäß irgendeinem der Ansprüche 1 bis 11, worin die am Ende von Schritt (ii) erhaltene Komponente durch Verdampfen des organischen Lösemittels bei atmosphärischem oder reduziertem Druck aus der entsprechenden Suspension gewonnen wird.

**13.** Katalysatorkomponente gemäß irgendeinem der Ansprüche 1 bis 12, worin in Schritt (iii) das Alkylaluminiumhalogenid ausgewählt ist aus Alkylaluminiumchloriden und -bromiden, insbesondere aus Diethylaluminiumchlorid und -bromid, Ethylaluminiumsesquichlorid, Diisobutylaluminiumchlorid und -bromid und deren Mischungen, und die Aktivierung mit der in einem inerten organischen Lösemittel suspendierten Komponente durchgeführt wird, wobei das Verhältnis der Halogenatome im Alkylaluminiumhalogenid zu den Alkoxygruppen im Titanalkoxid und/oder -halogenalkoxid im Bereich von 0.1/1 bis 10/1 liegt, und bei einer Temperatur im Bereich von 10 bis 100 °C über einen Zeitraum von 10 Minuten bis 5 Stunden.

**14.** Katalysatorkomponente gemäß irgendeinem der Ansprüche 1 bis 13, worin am Ende von Schritt (iii) die Komponente aus der entsprechenden Suspension durch Filtration gewonnen, mit eine Kohlenwasserstoff-Lösemittel gewaschen und getrocknet wird.

**15.** Katalysatorkomponente gemäß irgendeinem der Ansprüche 1 bis 14, welche zusätzlich mindestens ein Metall M, ausgewählt aus Vanadium, Zirkonium und Hafnium, enthält, wobei die entsprechende(n) Metallverbindung(en) vorzugsweise der Lösung von Schritt (i) zugesetzt worden ist (sind).

**16.** Katalysatorkomponente gemäß Anspruch 15, worin die Verbindung(en) von Vanadium, Zirkonium und Hafnium ausgewählt ist (sind) aus den entsprechenden Halogeniden, Oxyhalogeniden, Alkoxiden und Halogenalkoxiden, insbesondere aus Vanadiumtrichlorid und -tribromid, Zirkoniumtetrachlorid und -tetrabromid und Hafniumtetrachlorid und - tetrabromid und deren Mischungen.

**17.** Katalysatorkomponente gemäß irgendeinem der Ansprüche 15 und 16, worin in Schritt (ii) das Atomverhältnis von Magnesium zur Summe von Titan und Metall(en) M im Bereich von 1/1 bis 30/1, insbesondere von 1/1 bis 9/1, liegt, wobei das Atomverhältnis Ti/M von 0.1/1 bis 2/1 beträgt, insbesondere von 0.5/1 bis 1/1.

**18.** Katalysator für die (Co)polymerisation von Ethylen, welcher die feste Katalysatorkomponente gemäß irgendeinem der Ansprüche 1 bis 17 und eine metallorganische Verbindung von Aluminium enthält.

**19.** Verfahren für die (Co)polymerisation von Ethylen, worin der Katalysator gemäß Anspruch 18 oder die feste Katalysatorkomponente gemäß irgendeinem der Ansprüche 1 bis 17 eingesetzt wird.

**Patentansprüche für folgenden Vertragsstaat : ES**

**1.** Verfahren für die (Co)polymerisation von Ethylen, worin eine feste Komponente eines Katalysators für die (Co)polymerisation von Ethylen eingesetzt wird, die Magnesium, Halogen und Titan umfaßt und erhältlich ist durch die Schritte:

(i) Lösen einer Dialkylmagnesium-Verbindung, eines Siliciumhalogenids und, gegebenenfalls, eines Alkylhalogenids in einem inerten organischen Lösemittel, wobei das Atomverhältnis von Silicium zu Magnesium in einem Bereich von 0.5/1 bis 15/1 liegt und das Molverhältnis von Alkylhalogenid zu Siliciumhalogenid in einem Bereich von 0/1 bis 10/1 und wobei der Kontakt zwischen den oben genannten Verbindungen solange gehalten wird, bis ein granulärer Feststoff aus der Lösung ausfällt,

(ii) Kontaktieren und Umsetzen des obigen granulären Feststoffs mit einem Titanhalogenid, -alkoxid und/oder -halogenalkoxid, wobei das Atomverhältnis von Magnesium zu Titan im Bereich von 1/1 bis 60/1 liegt, um eine feste Katalysatorkomponente herzustellen und, für den Fall, daß ein Titanalkoxid oder -halogenalkoxid in Schritt (ii) verwendet worden ist,
(iii) Aktivieren des Feststoffs aus Schritt (ii) mit Alkylaluminiumhalogenid.

2. Verfahren gemäß Anspruch 1, worin in Schritt (i) das Siliciumhalogenid ausgewählt ist aus Siliciumchloriden, Siliciumbromiden, Chlorsilanen, Bromsilanen und deren Mischungen, z.B. aus Siliciumtetrachlorid, Siliciumtetrabromid, Trichlorsilan, Vinyltrichlorsilan, Trichlorethoxysilan und Chlorethyltrichlorsilan, und vorzugsweise Siliciumtetrachlorid ist.

3. Verfahren gemäß irgendeinem der Ansprüche 1 und 2, worin in Schritt (i) das Alkylhalogenid ausgewählt ist aus primären, sekundären und/oder tertiären $C_1$-$C_{20}$-Alkylchloriden und -bromiden, insbesondere aus Ethylbromid, Butylchlorid, Hexylchlorid, Octylchlorid, Cyclohexylchlorid und deren Mischungen.

4. Verfahren gemäß irgendeinem der Ansprüche 1 bis 3, worin in Schritt (i) die Dialkylmagnesiumverbindung ausgewählt ist aus solchen der Formel MgR'R'', worin R' und R'', gleich oder verschieden, lineare oder verzweigte $C_1$-$C_{10}$-Alkylgruppen darstellen, und insbesondere aus Diethylmagnesium, Ethylbutylmagnesium, Dihexylmagnesium, Butyloctylmagnesium, Dioctylmagnesium und deren Mischungen.

5. Verfahren gemäß irgendeinem der Ansprüche 1 bis 4, worin in Schritt (i) das Lösemittel ausgewählt ist aus Kohlenwasserstoffen, vorzugsweise aliphatischen Kohlenwasserstoffen.

6. Verfahren gemäß irgendeinem der Ansprüche 1 bis 5, worin in Schritt (i) die Lösung über einen Zeitraum von 0.5 bis 5 Stunden auf eine Temperatur von 40 bis 100 °C erhitzt wird.

7. Verfahren gemäß irgendeinem der Ansprüche 1 bis 6, worin in Schritt (i) das Atomverhältnis Si/Mg im Bereich von 1/1 bis 9/1 und/oder das Molverhältnis von Alkylhalogenid zu Siliciumhalogenid im Bereich von 0/1 bis 5/1 liegt, wobei die Lösung 1 bis 2 Stunden lang auf eine Temperatur von 70 bis 95 °C erhitzt wird.

8. Verfahren gemäß irgendeinem der Ansprüche 1 bis 7, worin in Schritt (i) der feste Niederschlag von der Flüssigkeit abgetrennt wird und sorgfältig mit einem inerten flüssigen Lösemittel, vorzugsweise einem Kohlenwasserstoff-Lösemittel, gewaschen wird.

9. Verfahren gemäß irgendeinem der Ansprüche 1 bis 8, worin in Schritt (ii) die Titanverbindung ausgewählt ist aus Titantetrachlorid, Titantetrabromid, Titan-tetra-n-propylat, Titan-tetra-n-butylat, Titantetra-i-propylat, Titan-tetra-i-butylat, den entsprechenden Titan-mono- und -dichloralkoxiden und -mono- und -dibromalkoxiden und deren Mischungen.

10. Verfahren gemäß irgendeinem der Ansprüche 1 bis 9, worin in Schritt (ii) der granuläre Feststoff in einem inerten organischen Lösemittel bei einer Temperatur von 50 bis 100 °C über einen Zeitraum von 0.5 bis 5 Stunden lang suspendiert wird.

11. Verfahren gemäß irgendeinem der Ansprüche 1 bis 10, worin in Schritt (ii) das Atomverhältnis Mg/Ti im Bereich von 4/1 bis 20/1 und die Arbeitstemperatur 1 bis 2 Stunden lang im Bereich von 60 bis 90 °C liegt.

12. Verfahren gemäß irgendeinem der Ansprüche 1 bis 11, worin die am Ende von Schritt (ii) erhaltene Komponente durch Verdampfen des organischen Lösemittels bei atmosphärischem oder reduziertem Druck aus der entsprechenden Suspension gewonnen wird.

13. Verfahren gemäß irgendeinem der Ansprüche 1 bis 12, worin in Schritt (iii) das Alkylaluminiumhalogenid ausgewählt ist aus Alkylaluminiumchloriden und -bromiden, insbesondere aus Diethylaluminiumchlorid und -bromid, Ethylaluminiumsesquichlorid, Diisobutylaluminiumchlorid und -bromid und deren Mischungen, und die Aktivierung mit der in einem inerten organischen Lösemittel suspendierten Komponente durchgeführt wird, wobei das Verhältnis der Halogenatome im Alkylaluminiumhalogenid zu den Alkoxygruppen im Titanalkoxid und/oder -halogenalkoxid im Bereich von 0.1/1 bis 10/1 liegt, und bei einer Temperatur im Bereich von 10 bis 100 °C über einen Zeitraum von 10 Minuten bis 5 Stunden.

**14.** Verfahren gemäß irgendeinem der Ansprüche 1 bis 13, worin am Ende von Schritt (iii) die Komponente aus der entsprechenden Suspension durch Filtration gewonnen, mit eine Kohlenwasserstoff-Lösemittel gewaschen und getrocknet wird.

**15.** Verfahren gemäß irgendeinem der Ansprüche 1 bis 14, welche zusätzlich mindestens ein Metall M, ausgewählt aus Vanadium, Zirkonium und Hafnium, enthält, wobei die entsprechende(n) Metallverbindung(en) vorzugsweise der Lösung von Schritt (i) zugesetzt worden ist (sind).

**16.** Verfahren gemäß Anspruch 15, worin die Verbindung(en) von Vanadium, Zirkonium und Hafnium ausgewählt ist (sind) aus den entsprechenden Halogeniden, Oxyhalogeniden, Alkoxiden und Halogenalkoxiden, insbesondere aus Vanadiumtrichlorid und -tribromid, Zirkoniumtetrachlorid und -tetrabromid und Hafniumtetrachlorid und -tetrabromid und deren Mischungen.

**17.** Verfahren gemäß irgendeinem der Ansprüche 15 und 16, worin in Schritt (ii) das Atomverhältnis von Magnesium zur Summe von Titan und Metall(en) M im Bereich von 1/1 bis 30/1, insbesondere von 1/1 bis 9/1, liegt, wobei das Atomverhältnis Ti/M von 0.1/1 bis 2/1 beträgt, insbesondere von 0.5/1 bis 1/1.

**18.** Verfahren für die (Co)polymerisation von Ethylen, worin ein Katalysator für die (Co)polymerisation von Ethylen eingesetzt wird, der die feste Katalysatorkomponente gemäß irgendeinem der Ansprüche 1 bis 17 und eine metallorganische Verbindung von Aluminium umfaßt.

**19.** Feste Katalysatorkomponente für die (Co)polymerisation von Ethylen gemäß irgendeinem der Ansprüche 1 bis 17.

**20.** Katalysator für die (Co)polymerisation von Ethylen, welcher die feste Katalysatorkomponente gemäß Anspruch 19 und eine metallorganische Verbindung von Aluminium enthält.

**Revendications**
**Revendications pour les Etats contractants suivants : AT, BE, CH, LI, DE, DK, FR, GB, GR, IT, LU, NL, SE**

**1.** Composant solide d'un catalyseur pour la (co)polymérisation d'éthylène, comprenant du magnésium, de l'halogène et du titane et pouvant être obtenu par les étapes consistant
(i) à dissoudre, dans un solvant organique inerte, un composé de type dialkylmagnésium, un halogénure de silicium et, éventuellement, un halogénure d'alkyle, le rapport atomique du silicium au magnésium étant compris entre 0,5/1 et 15/1, et le rapport molaire de l'halogénure d'alkyle à l'halogénure de silicium étant compris entre 0/1 et 10/1, et à maintenir le contact entre les composés ci-dessus jusqu'à ce qu'un solide granulaire précipite dans la solution;
(ii) à mettre en contact et à faire réagir le solide granulaire ci-dessus avec un halogénure de titane, un alcoolate et/ou halogénoalcoolate, le rapport atomique de magnésium au titane étant compris entre 1/1 et 60/1, afin de préparer un composant catalyseur solide, et, dans le cas où un alcoolate de titane ou halogénoalcoolate de titane a été utilisé dans l'étape (ii),
(iii) à activer le solide de l'étape (ii) avec un halogénure d'alkylaluminium.

**2.** Composant catalyseur conforme à la revendication 1 dans lequel. dans l'étape (i), l'halogénure de silicium est choisi parmi les chlorures de silicium, les bromures de silicium, les chlorosilanes, les bromosilanes et des mélanges de ceux-ci, par exemple, le tétrachlorure de silicium, le tétrabromure de silicium, le trichlorosilane, le vinyltrichlorosilane, le trichloroéthoxysilane et le chloroéthyltrichlorosilane et de préférence le tétrachlorure de silicium.

**3.** Composant catalyseur conforme à une quelconque des revendications 1 et 2 dans lequel, dans l'étape (i), l'halogénure d'alkyle est choisi parmi les chlorures et bromures d'alkyle en $C_{1-20}$ primaire, secondaire et/ou tertiaire, en particulier parmi le bromure d'éthyle, le chlorure de butyle, le chlorure d'hexyle, le chlorure d'octyle, le chlorure de cyclohexyle et des mélanges de ceux-ci.

**4.** Composant catalyseur conforme à une quelconque des revendications 1 à 3 dans lequel, dans l'étape (i), le composé de type dialkylmagnésium est choisi parmi les composés de formule MgR'R'', où R' et R'', identiques ou différents, représentent des groupes alkyle en $C_{1-10}$ linéaires ou ramifiés, et en particulier parmi le diéthylmagnésium, l'éthylbutylmagnésium, le dihexylmagnésium, le butyloctylmagnésium, le dioctylmagnésium et des mélanges de ceux-ci.

**5.** Composant catalyseur conforme à une quelconque des revendications 1 à 4 dans lequel, dans l'étape (i), le solvant est choisi parmi les hydrocarbures, de préférence les hydrocarbures aliphatiques.

**6.** Composant catalyseur conforme à une quelconque des revendications 1 à 5, dans lequel, dans l'étape (i), la solution est chauffé à une température comprise entre 40 et 100 °C pendant 0,5 à 5 heures.

**7.** Composant catalyseur conforme à une quelconque des revendications 1 à 6 dans lequel, dans l'étape (i), le rapport atomique Si/Mg est compris entre 1/1 et 9/1 et/ou le rapport molaire de l'halogénure d'alkyle à l'halogénure de silicium est compris entre 0/1 et 5/1, la solution étant chauffée à une température de 70 à 95 °C pendant en temps variant entre 1 et 2 heures.

**8.** Composant catalyseur conforme à une quelconque des revendications 1 à 7 dans lequel, dans l'étape (i), le précipité solide est séparé du liquide et est lavé abondamment avec un solvant liquide inerte, de préférence un solvant hydrocarboné.

**9.** Composant catalyseur conforme à une quelconque des revendications 1 à 8 dans lequel, dans l'étape (ii) le composé de titane est choisi parmi le tétrachlorure de titane, le tétrabromure de titane, le tétra-n-propylate de titane, le tétra-n-butylate de titane, le tétra-isopropylate de titane, le tétra-isobutylate de titane, les alcoolates de titane mono- et dichlorés ou mono- et dibromés correspondants et des mélanges de ceux-ci.

**10.** Composant catalyseur conforme à une quelconque des revendications 1 à 9 dans lequel, dans l'étape (ii), le solide granulaire est mis en suspension dans un solvant organique inerte, à une température comprise entre 50 et 100 °C pendant 0,5 à 5 heures.

**11.** Composant catalyseur conforme à une quelconque des revendications 1 à 10 dans lequel, dans l'étape (ii), le rapport atomique Mg/Ti est compris entre 4/1 et 20/1, la température opératoire est comprise entre 60 et 90 °C et la durée de la réaction étant comprise entre 1 et 2 heures.

**12.** Composant catalyseur conforme à une quelconque des revendications 1 à 11 dans lequel le composant obtenu à la fin de l'étape (ii) est récupéré à partir de la suspension correspondante par évaporation du solvant organique à pression atmosphérique ou ambiante.

**13.** Composant catalyseur conforme à une quelconque des revendications 1 à 12 dans lequel, dans l'étape (iii), l'halogénure d'alkylaluminium est choisi parmi les chlorures et bromures d'alkylaluminium, en particulier parmi le chlorure et bromure de diéthylaluminium, le sesquichlorure d'éthylaluminium, le chlorure et bromure de diisobutylaluminium et des mélanges de ceux-ci, et l'activation est effectuée avec le composant en suspension dans un solvant organique inerte, le rapport d'atomes d'halogène dans l'halogénure d'alkylaluminium aux groupes alcoxy dans l'alcoolate de titane et/ou l'halogénoalcoolate de titane étant compris entre 0,1/1 et 10/1, à une température comprise entre 10 et 100 °C, pendant une durée de 10 minutes à 5 heures.

**14.** Composant catalyseur conforme à une quelconque des revendications 1 à 13 dans lequel, à la fin de l'étape (iii), on récupère le composant à partir de la suspension correspondante par filtration et que l'on le lave avec un solvant hydrocarboné avant de le sécher.

**15.** Composant catalyseur conforme à une quelconque des revendications 1 à 14, contenant en plus au moins un métal M choisi parmi les vanadium, zirconium et hafnium, le(s) composé(s) métallique ayant de préférence été ajouté(s) à la solution de l'étape (i).

**16.** Composant catalyseur conforme à la revendication 15 dans lequel le ou les composant(s) de vanadium, de zirconium et d'hafnium est ou sont choisi(s) parmi les halogénures, oxyhalogénures, alcoolates et halogénoalcoolates, en particulier parmi le trichlorure et tribromure de vanadium, le tétrachlorure et tétrabromure de zirconium et le tétrachlorure et tétrabromure d'hafnium ainsi que des mélanges de ceux-ci.

17. Composant catalyseur conforme à une quelconque des revendications 15 et 16 dans lequel, dans l'étape (ii), le rapport d'atomes magnésium à la somme des atomes de titane et de métaux M est compris entre 1/1 et 30/1, en particulier entre 1/1 et 9/1, le rapport atomique Ti/M valant entre 0,1/1 et 2/1, en particulier entre 0,5/1 et 1/1.

18. Catalyseur pour la (co)polymérisation d'éthylène comprenant le composant catalyseur solide conforme à une quelconque des revendications 1 à 17 et un composé organométallique d'aluminium.

19. Procédé pour la (co)polymérisation d'éthylène dans lequel on utilise le catalyseur conforme à la revendication 18 ou le composant catalyseur solide conforme à une quelconque des revendications 1 à 17.

**Revendications pour l'Etat contractant suivant : ES**

1. Procédé pour la (co)polymérisation d'éthylène, dans lequel on utilise un composant solide d'un catalyseur pour la (co)polymérisation d'éthylène, lequel composant comprend du magnésium, de l'halogène et du titane et peuvent être obtenu par les étapes consistant
   (i) à dissoudre, dans un solvant organique inerte, un composé de type dialkylmagnésium, un halogénure de silicium et, éventuellement, un halogénure d'alkyle, le rapport atomique du silicium au magnésium étant compris entre 0,5/1 et 15/1, et le rapport molaire de l'halogénure d'alkyle à l'halogénure de silicium étant compris entre 0/1 et 10/1, et à maintenir le contact entre les composés ci-dessus jusqu'à ce qu'un solide granulaire précipite dans la solution;
   (ii) à mettre en contact et à faire réagir le solide granulaire ci-dessus avec un halogénure de titane, un alcoolate et/ou halogénoalcoolate, le rapport atomique de magnésium au titane étant compris entre 1/1 et 60/1, afin de préparer un composant catalyseur solide, et, dans le cas où un alcoolate de titane ou halogénoalcoolate de titane a été utilisé dans l'étape (ii),
   (iii) à activer le solide de l'étape (ii) avec un halogénure d'alkylaluminium.

2. Procédé conforme à la revendication 1 dans lequel, dans l'étape (i), l'halogénure de silicium est choisi parmi les chlorures de silicium, les bromures de silicium, les chlorosilanes, les bromosilanes et des mélanges de ceux-ci, par exemple, le tétrachlorure de silicium, le tétrabromure de silicium, le trichlorosilane, le vinyltrichlorosilane, le trichloroéthoxysilane et le chloroéthyltrichlorosilane et de préférence le tétrachlorure de silicium.

3. Procédé conforme à une quelconque des revendications 1 et 2 dans lequel, dans l'étape (i), l'halogénure d'alkyle est choisi parmi les chlorures et bromures d'alkyle en $C_{1-20}$ primaire, secondaire et/ou tertiaire, en particulier parmi le bromure d'éthyle, le chlorure de butyle, le chlorure d'hexyle, le chlorure d'octyle, le chlorure de cyclohexyle et des mélanges de ceux-ci.

4. Procédé conforme à une quelconque des revendications 1 à 3 dans lequel, dans l'étape (i), le composé de type dialkylmagnésium est choisi parmi les composés de formule MgR'R'', où R' et R'', identiques ou différents, représentent des groupes alkyle en $C_{1-10}$ linéaires ou ramifiés, et en particulier parni le diéthylmagnésium, l'éthylbutylmagnésium, le dihexylmagnésium, le butyloctylmagnésium, le dioctylmagnésium et des mélanges de ceux-ci.

5. Procédé conforme à une quelconque des revendications 1 à 4 dans lequel, dans l'étape (i), le solvant est choisi parmi les hydrocarbures, de préférence les hydrocarbures aliphatiques.

6. Procédé conforme à une quelconque des revendications 1 à 5, dans lequel, dans l'étape (i), la solution est chauffée à une température comprise entre 40 et 100 °C pendant 0,5 à 5 heures.

7. Procédé conforme à une quelconque des revendications 1 à 6 dans lequel, dans l'étape (i), le rapport atomique Si/Mg est compris entre 1/1 et 9/1 et/ou le rapport molaire de l'halogénure d'alkyle à l'halogénure de silicium est compris entre 0/1 et 5/1, la solution étant chauffée à une température de 70 à 95 °C pendant en temps variant entre 1 et 2 heures.

8. Procédé conforme à une quelconque des revendications 1 à 7 dans lequel, dans l'étape (i), le précipité solide est séparé du liquide et est lavé abondamment avec un solvant liquide inerte, de préférence un

EP 0 480 434 B1

solvant hydrocarboné.

9. Procédé conforme à une quelconque des revendications 1 à 8 dans lequel, dans l'étape (ii) le composé de titane est choisi parmi le tétrachlorure de titane, le tétrabromure de titane, le tétra-n-propylate de titane, le tétra-n-butylate de titane, le tétra-isopropylate de titane, le tétra-isobutylate de titane, les alcoolates de titane mono- et dichlorés ou mono- et dibromés correspondants et des mélanges de ceux-ci.

10. Procédé conforme à une quelconque des revendications 1 à 9 dans lequel, dans l'étape (ii), le solide granulaire est mis en suspension dans un solvant organique inerte, à une température comprise entre 50 et 100 °C pendant 0,5 à 5 heures.

11. Procédé conforme à une quelconque des revendications 1 à 10 dans lequel, dans l'étape (ii), le rapport atomique Mg/Ti est compris entre 4/1 et 20/1, la température opératoire est comprise entre 60 et 90 °C et la durée de la réaction est comprise entre 1 et 2 heures.

12. Procédé conforme à une quelconque des revendications 1 à 11 dans lequel le composant obtenu à la fin de l'étape (ii) est récupéré à partir de la suspension correspondante par évaporation du solvant organique à pression atmosphérique ou réduite.

13. Procédé conforme à une quelconque des revendications 1 à 12 dans lequel, dans l'étape (iii), l'halogénure d'alkylaluminium est choisi parmi les chlorures et bromures d'alkylaluminium, en particulier parmi le chlorure et bromure de diéthylaluminium, le sesquichlorure d'éthylaluminium, le chlorure et bromure de diisobutylaluminium et des mélanges de ceux-ci, et l'activation est effectuée avec le composant en suspension dans un solvant organique inerte, le rapport d'atomes d'halogène dans l'halogénure d'alkylaluminium aux groupes alcoxy dans l'alcoolate de titane et/ou l'halogénoalcoolate de titane étant compris entre 0,1/1 et 10/1, à une température comprise entre 10 et 100 °C, pendant une durée de 10 minutes à 5 heures.

14. Procédé conforme à une quelconque des revendications 1 à 13 dans lequel, à la fin de l'étape (iii), on récupère le composant à partir de la suspension correspondante par filtration et qu'on le lave avec un solvant hydrocarboné avant de le sécher.

15. Procédé conforme à une quelconque des revendications 1 à 14, contenant en plus au moins un métal M choisi parmi les vanadium, zirconium et hafnium, le(s) composé(s) métallique(s) correspondant(s) ayant de préférence été ajouté(s) à la solution de l'étape (i).

16. Procédé conforme à la revendication 15 dans lequel le ou les composant(s) de vanadium, de zirconium et d'hafnium est ou sont choisi(s) parmi les halogénures, oxyhalogénures, alcoolates et halogénoalcoolates correspondants, en particulier parmi le trichlorure et tribromure de vanadium, le tétrachlorure et tétrabromure de zirconium et le tétrachlorure et tétrabromure d'hafnium ainsi que des mélanges de ceux-ci.

17. Procédé conforme à une quelconque des revendications 15 et 16 dans lequel, dans l'étape (ii), le rapport d'atomes de magnésium à la somme des atomes de titane et de métaux M est compris entre 1/1 et 30/1, en particulier entre 1/1 et 9/1, le rapport atomique Ti/M valant entre 0,1/1 et 2/1, en particulier entre 0,5/1 et 1/1.

18. Procédé pour la (co)polymérisation d'éthylène dans lequel on utilise un catalyseur de (co)-polymérisation d'éthylène comprenant le composant catalyseur solide conforme à une quelconque des revendications 1 à 17 et un composé organométallique d'aluminium.

19. Composant solide d'un catalyseur pour la (co)polymérisation d'éthylène conforme à une quelconque des revendications 1 à 17.

20. Catalyseur pour la (co)polymérisation d'éthylène comprenant le composant de catalyseur solide conforme à la revendication 19 et un composé organométallique d'aluminium.

25

DIFFRACTION ANGLE 2 THETA

FIG. 1

EP 0 480 434 B1

FIG. 2